(19) Europäisches Patentamt
European Patent Office
Office européen des brevets

(11) **EP 2 144 361 B1**

(12) **EUROPÄISCHE PATENTSCHRIFT**

(45) Veröffentlichungstag und Bekanntmachung des Hinweises auf die Patenterteilung:
**29.03.2017 Patentblatt 2017/13**

(51) Int Cl.:
***H02M 7/797*** *(2006.01)*     ***H02J 3/18*** *(2006.01)*

(21) Anmeldenummer: **08012432.4**

(22) Anmeldetag: **09.07.2008**

(54) **Verfahren und Vorrichtung zur Einstellung einer Rückspeiseleistung eines grundfrequent getakteten Stromrichters**

Method and device for regulating the regenerative power of a base frequency clocked inverter

Procédé et dispositif de réglage d'une puissance régénérative d'un convertisseur de courant cadencé avec fréquence de base

(84) Benannte Vertragsstaaten:
**DE**

(43) Veröffentlichungstag der Anmeldung:
**13.01.2010 Patentblatt 2010/02**

(73) Patentinhaber: **Siemens Aktiengesellschaft 80333 München (DE)**

(72) Erfinder: **Benesch, Norbert, Dr. 90562 Heroldsberg (DE)**

(56) Entgegenhaltungen:
**EP-A- 0 353 569**     **DE-A1-102006 015 031**
**DE-A1-102006 028 103**

**Beschreibung**

Die vorliegende Erfindung betrifft ein Verfahren zur Einstellung, insbesondere zur variablen Einstellung einer Rückspeiseleistung eines grundfrequent getakteten, netzseitigen Stromrichters mit einer mit steuerbaren Halbleiterschaltern bestückten Brückenschaltung sowie eine zur Ausführung des Verfahrens vorgesehene Vorrichtung, also ein Stromrichtergerät mit einem derartigen Stromrichter und einer derartigen Brückenschaltung.

Stromrichter und Verfahren zu deren Betrieb sind an sich bekannt. Insoweit wird zum Stand der Technik auf die DE 10 2005 012 150 A1 und die DE 10 2006 015 031 A1 verwiesen. Ein Stromrichtergerät oder eine Stromrichterschaltung umfasst zumindest einen Netzanschluss und als Netzanschluss dafür vorgesehene, als Strompfade fungierende Stränge, beim Anschluss an ein Dreiphasennetz also drei Stränge, sodann den eigentlichen Stromrichter mit der die Stromrichtungsfunktionalität implementierenden Brückenschaltung und am Ausgang des Stromrichters einen Zwischenkreis, wobei ein erster Ausgang des Stromrichters einen ersten Zwischenkreiskontakt und ein zweiter Ausgang des Stromrichters einen zweiten Zwischenkreiskontakt bilden. Zwischen diesen beiden Zwischenkreiskontakten liegt im Betrieb eine Zwischenkreisspannung an, die sich aufgrund der Stromrichtung als Gleichspannung ergibt. Zur Pufferung und Glättung der Zwischenkreisspannung ist üblicherweise zwischen den Zwischenkreiskontakten eine Zwischenkreiskapazität angeordnet.

Bei einem im Betrieb sich ergebenden positiven Leistungsfluss in den Zwischenkreis arbeitet der Stromrichter näherungsweise wie eine so genannte B6-Diodenbrücke, da nur die von dem Stromrichter umfassten Dioden den Strom führen und jeweils antiparallel dazu als Halbleiterschalter angeordnete Transistoren stromlos sind. Umgekehrt liegen bei Leistungsfluss aus dem Zwischenkreis in das Netz die Dioden in Sperrrichtung und dem Strom wird durch entsprechende Aktivierung einzelner Transistoren zu jedem Zeitpunkt genau ein Pfad in das Netz ermöglicht. Eine bevorzugte Schaltung für die den Stromrichter bildende Brückenschaltung ist eine so genannte IGBT-B6-Brücke (Insulated-Gate-Bipolar-Transistor), die eine passive parallele Dioden-Brücke beinhaltet, die einen rein passiven Betrieb in eine Leistungsrichtung, also z. B. für den Leistungsfluss in den Zwischenkreis, und einen aktiven Ein-/Rückspeise-Leistungsfluss, also entsprechend z. B. aus dem Zwischenkreis in das Netz, ermöglicht. Schaltflanken zur Ansteuerung der im Folgenden allgemein als Halbleiterschalter bezeichneten Transistoren liegen im grundfrequenten Betrieb bei so genannten natürlichen Zündzeitpunkten, also Schnittpunkten der Netzspannungen, die der Schaltung oder dem Gerät über die einzelnen Strompfade zugeführt werden, bei einem Dreiphasennetz, also die einzelnen, im Folgenden mit R, S, T bezeichneten Leitungen des Drehstromnetzes mit den darüber zugeführten Netzspannungen $U_R$, $U_S$ und $U_T$.

Der grundfrequent getaktete Betrieb von Stromrichtern zeichnet sich durch einige Vorteile aus, die den Einsatz sinnvoll machen. Da kein hochfrequentes Takten der auch als Stromventile bezeichenbaren Halbleiterschalter erfolgt, ergeben sich beispielsweise geringe Schaltverluste und weiter die Möglichkeit einer Verwendung einfacher und kostengünstiger Kommutierungsdrosseln und Netzfilter sowie schließlich eine geringe Anregung von Systemschwingungen, die z. B. zu hohen Motorlagerströmen führen können. Schließlich ist der Betrieb derartiger Stromrichter im Allgemeinen robust gegenüber Netzstörungen, Netzunsymmetrien und dergleichen.

Ein erheblicher Nachteil dieser Betriebsart ist bisher allerdings, dass bei Leerlauf oder bei schwacher Belastung des Stromrichters ein relativ großer Blindleistungsbedarf entsteht. Dies führt zu einer Belastung des Stromnetzes beim Anwender und zu erhöhten Energiekosten. Die Technologie wird dadurch schwieriger zu vermitteln oder zu vermarkten. Ein weiterer Nachteil ist, dass bei Netzspannungseinbrüchen die Zwischenkreisspannung der Netzspannung folgt und damit im Zwischenkreis gespeicherte Energie für eine Pufferung verloren geht.

Eine einfache Maßnahme zur Vermeidung dieser Nachteile ist, die Halbleiterschalter nur dann einzuschalten, wenn eine Energierückspeisung in das Netz erforderlich ist. Ein einfaches Kriterium dafür kann z. B. das Ansteigen der Zwischenkreisspannung über einen Schwellwert sein. Die Rückspeisung, also das Ansteuern das Halbleiterschalter kann wieder deaktiviert werden, sobald z. B. Zwischenkreisspannung unter einen unteren Schwellwert gefallen ist oder der Wirkstrom in das Netz im Mittel unter einen bestimmten Wert gefallen ist.

Um einen stabilen Betriebszustand und ausreichende Wirkung dieser Maßnahme zu erreichen, dürfen die beiden Schwellwerte nicht zu nahe zusammen liegen. Zudem kann die Netzspannung und damit die natürliche Gleichrichtspannung großen Schwankungen unterliegen, für die die Schwellen ebenfalls einen ausreichenden Abstand aufweisen müssen. Der als Energiepuffer fungierende Zwischenkreis kann bei Lastwechseln zudem umso besser ausgenutzt werden, je größer der Abstand der beiden Schwellen ist. Im Betrieb kann eine schnelle Änderung der Zwischenkreisspannung jedoch negative Auswirkungen auf den zu betreibenden Prozess / die zu betreibenden Applikation haben und z. B. zu einer Reduzierung der Drehmomentgenauigkeit bei elektrischen Antrieben und damit Abweichungen von einer Solllage führen.

Bisher wurde das oben skizzierte Problem z. B. gelöst durch entweder Verwendung einer großen Kommutierungsinduktivität mit den Nachteilen erhöhter Kosten und eines unerwünschten erhöhten Spannungsabfalls oder durch Verwendung einer großen Zwischenkreiskapazität mit den Nachteilen erhöhter Kosten oder mittels einer regelungstechnischen Kompensation der Spannungsänderungen im Zwischenkreis und ebenfalls den Nachteilen erhöhter Kosten wegen Anforderungen an einen kurzen Reglertakt oder aufgrund zusätzlich erforderlicher schaltungstechnischer Maßnahmen.

Die DE 10 2006 028 103 A1 gibt einen Stromrichter an, bei dem zwischen einem grundfrequenten ungeregelten Betrieb und einem getakteten, spannungsgeregelten Betrieb umgeschaltet wird, wenn die Betriebsart, in welcher sich der Stromrichter zu einem Zeitpunkt befindet, als für die momentanen Leistungsanforderungen an den Stromrichter ungeeignet befunden wird.

Eine Aufgabe der Erfindung besteht entsprechend darin, ein Verfahren zur Steuerung grundfrequenter Ein/Rückspeisungen, anzugeben, das die genannten großen Vorteile eines zeitweise Sperrens der Transistoren T1-T6 bei motorischem Einspeisebetrieb (robustes Verhalten einer Diodenbrücke bei Netzstörungen, kein zusätzlicher Oberschwingungs-Blindleistungsbedarf bei Leerlauf und Teillast, reduzierte Schaltverluste) erhält und gleichzeitig schnelle und große Änderungen der Zwischenkreisspannung bei Start des grundfrequenten Rückspeisebetriebs vermeidet.

Diese Aufgabe wird erfindungsgemäß gelöst mit den Merkmalen des Anspruchs 1. Dazu ist bei einem Verfahren zur Einstellung einer Rückspeiseleistung eines grundfrequent getakteten, netzseitigen Stromrichters mit einer mit steuerbaren Halbleiterschaltern bestückten Brückenschaltung, wobei die grundfrequente Taktung der Halbleiterschalter abhängig von einer gewünschten Richtung eines Leistungsflusses über die Brückenschaltung erfolgt und wobei Ansteuersignale für die Halbleiterschalter einerseits aus der grundfrequenten Taktung und andererseits aus einer von einer Systemgröße des Stromrichters, insbesondere einer Zwischenkreisspannung eines mit dem Stromrichter verbundenen Zwischenkreises, abhängigen Einschaltverzögerung abgeleitet werden, vorgesehen, dass die Einschaltverzögerung auf Basis einer vorgegebenen oder vorgebbaren Kennlinie in Abhängigkeit von der jeweiligen Systemgröße, insbesondere der Zwischenkreisspannung, ermittelt wird, wobei "abhängig" hier weit auszulegen ist, derart, dass z.B. auch eine Zwischenkreisleistung, in welche die Zwischenkreisspannung multiplikativ eingeht, als "abhängig von der Zwischenkreisspannung" aufzufassen ist. Die o.g. Aufgabe wird ebenfalls gelöst mit einer korrespondierenden Vorrichtung mit den Merkmalen des ersten unabhängigen Vorrichtungsanspruchs, wobei sich die Vorrichtung, also ein Stromrichtergerät, durch Mittel zur Ausführung der einzelnen Verfahrensschritte auszeichnet.

Vorteilhafte Ausgestaltungen der Erfindung sind Gegenstand der Unteransprüche. Dabei verwendete Rückbeziehungen weisen auf die weitere Ausbildung des Gegenstandes des oder der unabhängigen Ansprüche durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Die Erfindung bietet die Möglichkeit einer einfachen und robusten Realisierung einer spannungsabhängigen Freigabe der Rückspeisung im grundfrequenten Betrieb. Durch die Vermeidung einer sprungartigen Rückspeisefreigabe werden ein sprunghafter Abfall der Zwischenkreisspannung und ein sehr schneller Anstieg des Netzstroms vermieden mit folgenden Vorteilen:

- Drehmomentstörungen beim Antrieb durch unkompensierte Änderungen der Zwischenkreisspannung werden vermieden
- Ein Schwellwert für die Zwischenkreisspannung zur Freigabe der Rückspeisung kann hoch liegen (große stromtreibende Differenzspannung bei Freigabe der Rückspeisung). Damit kann die Energiepufferung des Zwischenkreises bei Lastwechseln besser ausgenutzt werden. Es ergibt sich insbesondere eine Wirkungsgradverbesserung, eine Möglichkeit zum Weiterbetrieb bei Netzstörungen und eine Verbesserung der thermischen Belastung.
- Bei Bedarf ist eine Anhebung/Regelung der Zwischenkreisspannung für besondere Anwendungen realisierbar (z. B. ist das Betriebsverhalten eines so genannten Choppers mit geringeren Kosten realisierbar)
- Höhere Akzeptanz des grundfrequenten Betriebs beim Anwender, da ein Rückspeisen nur dann erfolgt, wenn nötig.
- Im Mittel reduzierte thermische Belastung des Stromrichters und der Zusatzkomponenten
- Keine Erhöhung der Schaltfrequenz der Halbleiterschalter bei dem vorgeschlagenen Ansatz zur Reduzierung des Schaltsektors.
- Kostengünstig zu realisieren (kein zusätzlicher Bauteilaufwand oder Fertigungsaufwand)
- Kompatibel zur bisherigen Implementierung des grundfrequenten Betriebs

Die Ansteuersignale zur Aktivierung der einzelnen Halbleiterschalter sind charakteristisch für einen nach der vorliegenden Erfindung arbeitenden Stromrichter.

Das weiter oben skizzierte und nachfolgend näher erläuterte Verfahren wird bevorzugt in Software und/oder Firmware (Microcode nach VHDL o.ä. in FPGA, ASIC oder dgl.) implementiert, so dass die Erfindung auch ein Computerprogramm mit durch einen Computer ausführbaren Programmcodeanweisungen bzw. Mikrocodeanweisungen betrifft. Insoweit betrifft die Erfindung dann auch ein Speichermedium mit einem durch einen Computer ausführbaren derartigen Computerprogramm sowie ein Stromrichtergerät, auf dem ein derartiges Computerprogramm geladen ist. Schließlich betrifft die Erfindung damit auch ein Stromrichtergerät mit einer Verarbeitungseinheit nach Art eines Prozessors oder dergleichen als Mittel zur Ableitung von Ansteuersignalen für die Halbleiterschalter aus der grundfrequenten Taktung und einer von einer Zwischenkreisspannung eines mit dem Stromrichter verbundenen Zwischenkreises abhängigen Einschaltverzögerung und als Mittel zur Ermittlung der Einschaltverzögerung auf Basis einer vorgegebenen oder vorgebbaren Kennlinie in Abhängigkeit von der Zwischenkreisspannung, wobei auf der Verarbeitungseinheit ein Computerprogramm wie oben skizziert geladen ist und/oder wobei die Verarbeitungseinheit zur Ausführung eines derartigen Computerprogramms bestimmt und vorgesehen ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen, die zum Beispiel durch Kombination oder Abwandlung von einzelnen in Verbindung mit den im allgemeinen oder speziellen Beschreibungteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1 einen Stromrichter mit einer Halbleiterschalter umfassenden Brückenschaltung an einem Dreiphasennetz,

FIG 2 eine Darstellung zur Erläuterung einer Steuerlogik der Halbleiterschalter mit der Steuerlogik zugrunde liegenden Schaltsektoren,

FIG 3 ein beispielhafter Ablauf einer Rückspeisung mit verkürzten Schaltsektoren,

FIG 4 eine graphische Darstellung eines verkürten Schaltsektors,

FIG 5 bis

FIG 7 für drei stationäre Betriebspunkte eine graphische Darstellung einer Abhängigkeit eines mittleren Netzstroms und einer damit korrelierten mittlere Zwischenkreisspannung von der Größe des Schaltsektors,

FIG 8 ein Blockschaltbild eines Regelkreises zur Ermittlung der Größe des Schaltsektors,

FIG 9 ein beispielhafter Ablauf einer Rückspeisung mit nach dem Ansatz gemäß der Erfindung verkürzten Schaltsektoren, wobei verringerte Spannungssteilheiten deutlich werden,

FIG 10 ein Blockschaltbild eines Regelkreises zur Ermittlung von reduzierter Grenzwerte für eine Beendigung der Rückspeisung und

FIG 11 ein beispielhafter Ablauf zur Reduzierung der Stromgrenze gemäß einem zusätzlichen Aspekt der Erfindung.

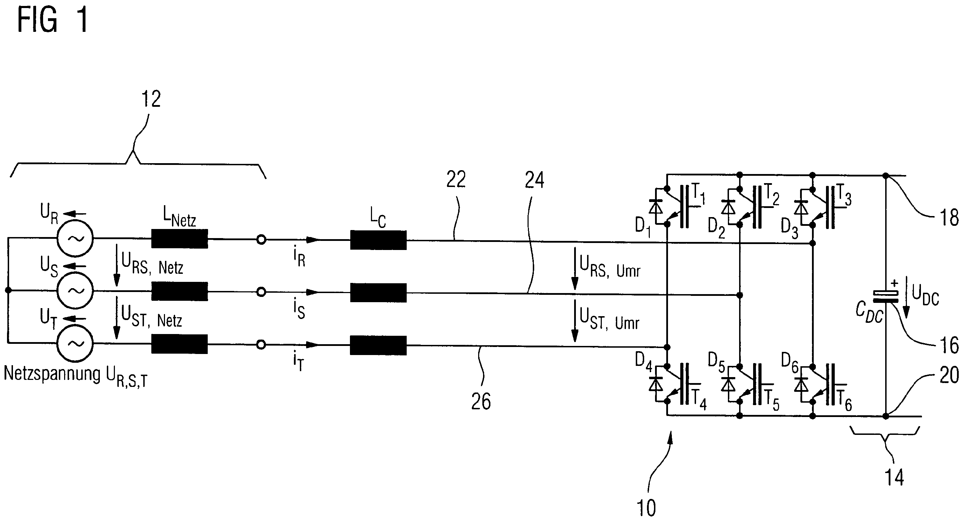

FIG 1 zeigt schematisch vereinfacht den Anschluss und den Aufbau eines Stromrichters 10 an einem Dreiphasennetz 12, wobei der Stromrichter 10 eine mit steuerbaren Halbleiterschaltern T1, T2, T3, T4, T5, T6 und antiparallelen Dioden D1, D2, D3, D4, D5, D6 bestückte Brückenschaltung, insbesondere in einer Ausführung als IGBT-B6-Brücke, umfasst.

Dem Stromrichter 10 ist an dessen Ausgang ein Zwischenkreis 14 nachgeordnet, der eine Zwischenkreiskapazität 16 umfasst, über der im Betrieb eine Zwischenkreisspannung $u_{DC}$ abfällt. Die Zwischenkreiskapazität 16 wird entsprechend üblicher Schaltungselementbezeichnungen auch als $C_{DC}$ bezeichnet. An den Zwischenkreis 14 ist im Betrieb als Last üblicherweise ein hier nicht gezeigter Antrieb angeschlossen.

Von dem Stromrichter 10 sind eine Anzahl oberer Halbleiterschalter T1-T3, im dargestellten Fall genau drei obere Halbleiterschalter T1-T3, mit einem im Betrieb des Stromrichters 10 auf einem ersten Zwischenkreispotential liegenden ersten Zwischenkreiskontakt 18 verbunden. Entsprechend sind eine Anzahl unterer Halbleiterschalter T4-T6, im dargestellten Fall genau drei untere Halbleiterschalter T4-T6, mit einem im Betrieb des Stromrichters 10 auf einem zweiten Zwischenkreispotential liegenden zweiten Zwischenkreiskontakt 20 verbunden. Zwischen dem ersten und dem zweiten Zwischenkreiskontakt 18, 20 ist der Zwischenkreiskondensator 16 angeschlossen und die Potentialdifferenz zwischen den an diesen Kontakten 18, 20 anliegenden Potentialen entspricht der Zwischenkreisspannung $U_{DC}$.

Eingangsseitig ist der Stromrichter 10 mit dem Netz 12 verbunden, und zwar über netzseitige Stränge 22, 24, 26 und zwar derart, dass jeder Strang 22-26 an einen Mittelabgriff zwischen jeweils einem oberen und einem unteren Halbleiterschalter T1-T6 angeschlossen ist. Jeder Strang 22-26 umfasst eine Kommutierungsdrossel $L_C$ und in jedem Strang 22-26 fließt ein durch die Netzspannungen $u_R$, $u_S$, $u_T$ bestimmter Strom $i_R$, $i_S$, $i_T$. Für das speisende Netz 12 ist für jede Phase R, S, T jeweils eine Netzinduktivität $L_{Netz}$ gezeigt.

Schaltflanken zur Ansteuerung der Halbleiterschalter T1-T6 liegen für einen grundfrequenten Betrieb bei so genannten natürlichen Zündzeitpunkten, nämlich den Schnittpunkten der sinusförmigen Netzspannungen $u_R$, $u_S$, $u_T$ oder den Nulldurchgängen der Leiter-Leiter-Spannungen $u_{RS}$, $u_{ST}$ und $u_{TR}$, oder zumindest in der Nähe solcher Zündzeitpunkte wobei die Lage der Schaltflanken gg. durch Optimierung verbessert wird.

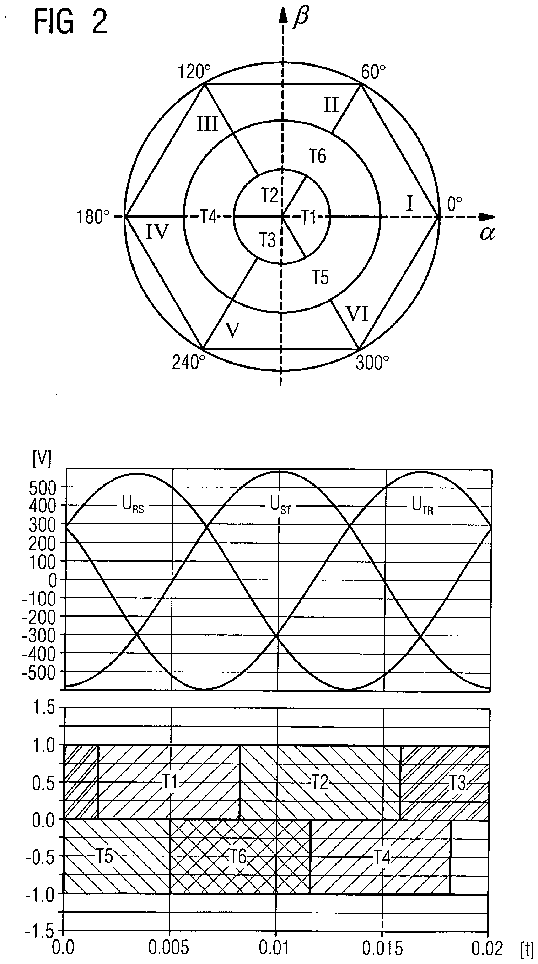

In FIG 2 ist dazu schematisch vereinfacht zur Erläuterung einer Steuerlogik der Halbleiterschalter T1-T6 im grundfrequenten Betrieb eine Netzperiode von 0°-360° dargestellt, wobei die Darstellung auf der linken Seite von FIG 2 im Folgenden als Sektordiagramm bezeichnet wird und bei darin eingezeichneten Sektorgrenzen (bei 0°, 60,° 120°, 180°, 240°, 300°) jeweils eine Umschaltung (Kommutierung) zwischen zwei Halbleiterschaltern T1-T6 stattfindet, bei der Sektorgrenze bei 0° z. B. zwischen den mit T5 und T6 bezeichneten Halbleiterschaltern. Bei positivem Leistungsfluss in dem Zwischenkreis 14 arbeitet der Stromrichter 10 näherungsweise wie eine B6-Dioden-Brücke, da die Dioden D1-D6 den Strom führen und die jeweils antiparallel dazu angeordneten Halbleiterschalter T1-T6 stromlos sind. Bei Leistungsfluss aus dem Zwischenkreis 14 in das Netz 12 liegen die Dioden D1-D6 in Sperrrichtung und dem Strom wird zu jedem Zeitpunkt genau ein Pfad über jeweils aktive Halbleiterschalter T1-T6 in das Netz 12 ermöglicht.

Der grundfrequent getaktete Betrieb von Stromrichtern zeichnet sich durch einige Vorteile aus, die den Einsatz sinnvoll machen. Da kein hochfrequentes Takten der auch als Stromventile bezeichenbaren Halbleiterschalter erfolgt, ergeben sich beispielsweise geringe Schaltverluste und weiter die Möglichkeit einer Verwendung einfacher und kostengünstiger Kommutierungsdrosseln und Netzfilter sowie schließlich eine geringe Anregung von Systemschwingungen, die z. B. zu hohen Motorlagerströmen führen können. Schließlich ist der Betrieb derartiger Stromrichter im Allgemeinen robust gegenüber Netzstörungen, Netzunsymmetrien und dergleichen.

Als Nachteil einer solchen Betriebsart hat sich allerdings ergeben, dass bei Leerlauf oder bei schwacher Belastung des Stromrichters ein relativ großer Blindleistungsbedarf entsteht, was zu einer Belastung des Stromnetzes beim Anwender und zu erhöhten Energiekosten führt. Darüber hinaus folgt bei Netzspannungseinbrüchen die Zwischenkreisspannung $u_{DC}$ der Netzspannung, so dass im Zwischenkreis gespeicherte Energie für eine Pufferung verloren geht.

Eine einfache Maßnahme zur Vermeidung dieser Nachteile ist, die Halbleiterschalter T1-T6 nur dann einzuschalten, wenn eine Energierückspeisung in das Netz erforderlich ist. Ein einfaches Kriterium dafür kann z. B. das Ansteigen der Zwischenkreisspannung $u_{DC}$ über einen oberen Schwellwert $u_{DC1}$ sein. Die Rückspeisung, also das Ansteuern das Halbleiterschalter T1-T6 kann wieder deaktiviert werden, sobald z. B. die Zwischenkreisspannung $u_{DC}$ unter einen unteren Schwellwert $u_{DC2}$ gefallen ist oder der Wirkstrom in das Netz im Mittel unter einen bestimmten Wert gefallen ist.

Um einen stabilen Betriebszustand und ausreichende Wirkung dieser Maßnahme zu erreichen, dürfen die beiden Schwellwerte $u_{DC1}$, $u_{DC2}$ allerdings nicht zu nahe beieinander liegen. Zudem kann die Netzspannung und damit die natürliche Gleichrichtspannung großen Schwankungen unterliegen, für die die Schwellen $u_{DC1}$, $u_{DC2}$ ebenfalls einen ausreichenden Abstand aufweisen müssen. Der als Energiepuffer fungierende Zwischenkreis kann bei Lastwechseln zudem um so besser ausgenutzt werden, je größer der Abstand der beiden Schwellen $u_{DC1}$, $u_{DC2}$ ist.

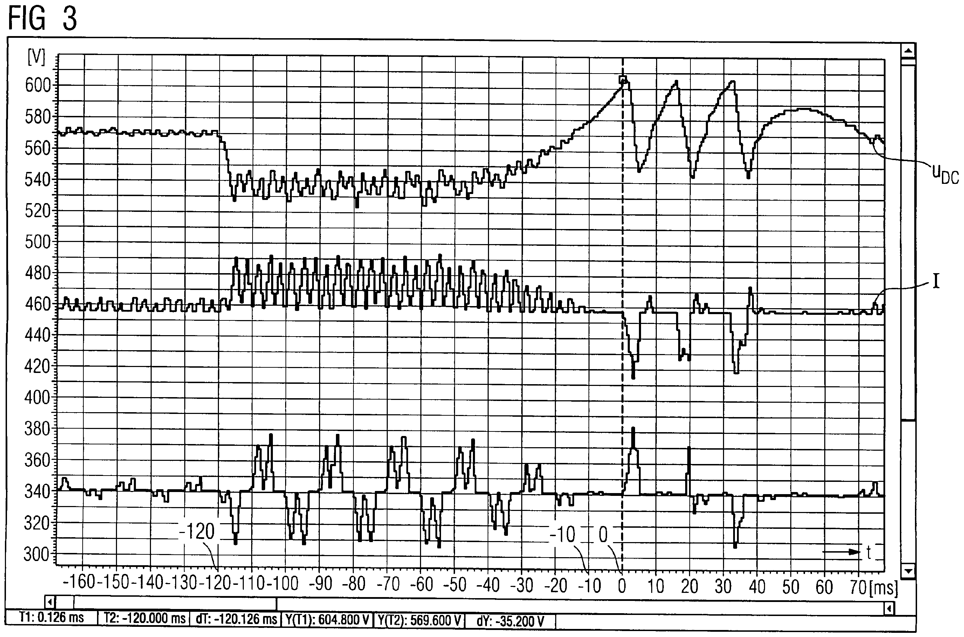

Ein beispielhafter Ablauf ist in FIG 3 dargestellt, die einen zeitlichen Verlauf der Zwischenkreisspannung $u_{DC}$, eines Wirkstroms und des Stroms in Netzphase zeigt: Bei motorischer Belastung des Zwischenkreises 14 (FIG 1) sinkt bei t = -120ms zunächst die Zwischenkreisspannung $u_{DC}$ und es fließt ein oberschwingungsbehafteter Wirkstrom I über die interne B6-Diodenbrücke, wobei die Halbleiterschalter T1-T6 gesperrt sind. Anschließend sinkt die motorische Belastung und ab ca. t = -10ms wird der Zwischenkreis 14 durch die angeschlossene Last aufgeladen. Ab einem bestimmten Zeitpunkt (hier $u_{DC}$ > $u_{DC2}$ bei t = 0) wird die grundfrequente Ansteuerung der Halbleiterschalter T1-T6 zu den natürlichen Zündzeitpunkten aktiviert. Da sofort die volle Rückspeiseleistung zur Verfügung steht, sinkt die Zwischenkreisspannung $u_{DC}$ sehr schnell (abhängig von der Größe des Zwischenkreiskondensators 16, der Netzinduktivität $L_{Netz}$ und der Spannungsdifferenz von Netz und Zwischenkreis); im dargestellten Fall um mehr als 20V/ms.

Die schnelle Änderung der Zwischenkreisspannung $u_{DC}$ kann negative Auswirkungen auf den zu betreibenden Prozess / die zu betreibende Applikation haben, z. B. eine Reduzierung der Drehmomentgenauigkeit bei elektrischen Antrieben.

Bisher wurde das oben skizzierte Problem z. B. gelöst durch entweder Verwendung einer großen Kommutierungsinduktivität $L_C$ mit den Nachteilen erhöhter Kosten und eines unerwünschten zusätzlichen Spannungsabfalls oder durch Verwendung einer großen Zwischenkreiskapazität 16 mit den Nachteilen erhöhter Kosten oder mittels einer regelungstechnischen Kompensation der $u_{DC}$-Spannungsänderung im Antrieb und ebenfalls den Nachteilen erhöhter Kosten wegen Anforderungen an einen kurzen Reglertakt oder aufgrund zusätzlich erforderlicher schaltungstechnischer Maßnahmen.

Der grund- oder netzfrequente Betrieb erlaubt zwar Energiefluss sowohl in Einspeise- als auch in Rückspeiserichtung, ist jedoch ungeregelt, d.h. Netzstrom und Zwischenkreisspannung $u_{DC}$ stellen sich frei in Abhängigkeit von aktueller Netzspannung und Zwischenkreisbelastung ein. Kennzeichnend ist, dass für die Rückspeisung die Halbleiterschalter T1-T6 im Takt der Netzfrequenz angesteuert werden.

Der Ansatz gemäß der Erfindung zielt nun darauf ab, die Steuerung der Transistoren derart zu verändern, dass eine Reduzierung der Rückspeiseleistung erreicht wird und damit eine langsamere Änderung der Zwischenkreisspannung $u_{DC}$ resultiert. Dies ist insbesondere zum Zeitpunkt der Freigabe des Rückspeisens bei vorangegangenem Diodenbrückenbetrieb sinnvoll.

Dazu wird eine Reduzierung des Schaltsektors (vgl. FIG 2) in Abhängigkeit einer oder mehrerer Systemgrößen, vorzugsweise der Zwischenkreisspannung $u_{DC}$, einem Zwischenkreisstrom, einem Netzstrom, einer Netzspannung, einem externen Signal, z. B. einem von einer angeschlossenen Last oder einem einem angeschlossenen Wechselrichter, usw., oder einer von einer oder mehren der vorgenannten Systemgrößen direkt oder indirekt abhängigen Systemgröße z.B. einer Zwischenkreisleistung ($P = u_{DC} \times i_{DC}$), und/oder eine Reduzierung der Stromgrenze in Abhängigkeit einer oder mehrerer Systemgrößen derartiger Systemgrößen, vorzugsweise der Zwischenkreisspannung $u_{DC}$, vorgeschlagen. Im Einzelnen:

Reduzierung des Schaltsektors

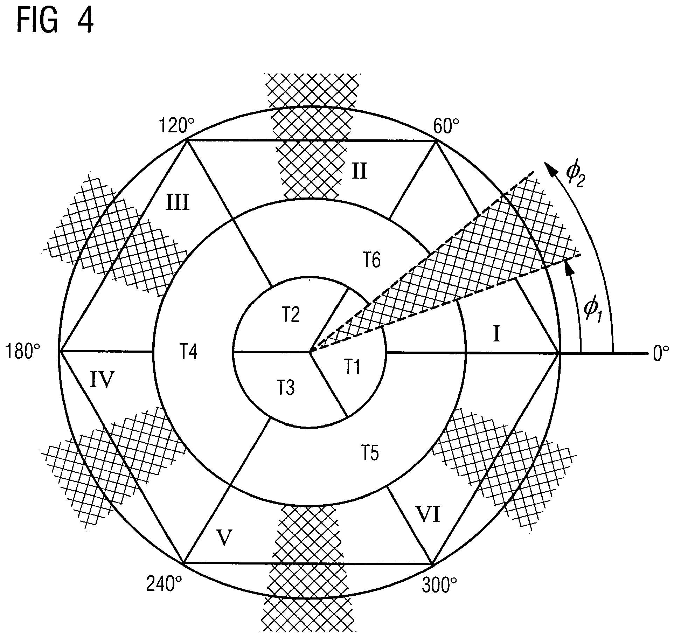

Vorgeschlagen wird, die Rückspeiseleistung durch Verkleinerung des Schaltsektors zu beeinflussen. Statt zu den natürlichen Zündzeitpunkten (FIG 2) werden die als Halbleiterschalter T1-T6 fungierenden Transistoren später eingeschaltet und früher wieder ausgeschaltet. In FIG 4 ist dies beispielhaft für den ersten Sektor (I) gezeigt, wobei zwei der als Halbleiterschalter T1-T6 eingesetzten Transistoren, nämlich die mit T1 und T6 bezeichneten Transistoren, nicht von 0° bis 60° Netzwinkel eingeschaltet, sondern nur von $\phi_1$ bis $\phi_2$ eingeschaltet werden. Während der übrigen Zeit sind alle Halbleiterschalter T1-T6 geöffnet und lassen kein Rückspeisen zu. Die Werte für $\phi_1$ führen also zu einer Einschaltverzögerung der jeweiligen Halbleiterschalter T1-T6, während die Werte für $\phi_2$ zu einem Ausschalten der Halbleiterschalter T1-T6 führen, was hier und im Folgenden als negative Ausschaltverzögerung bezeichnet wird.

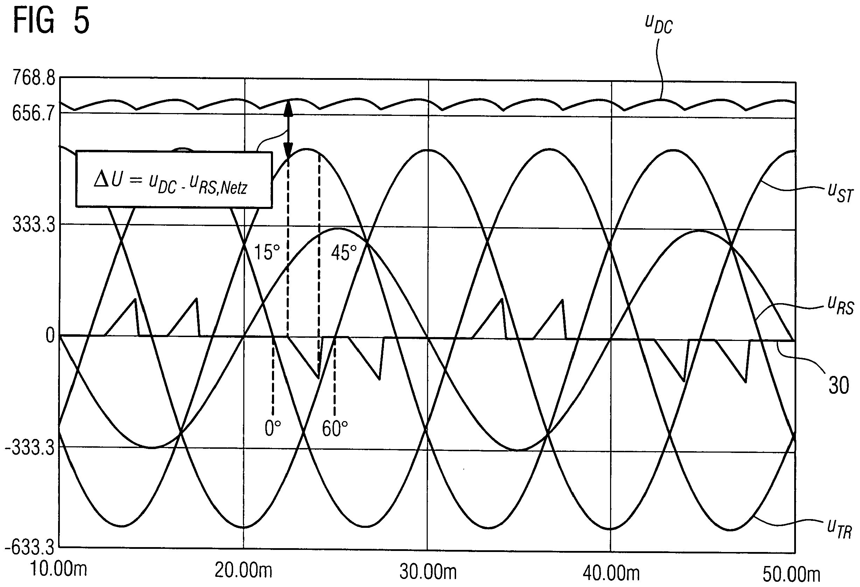

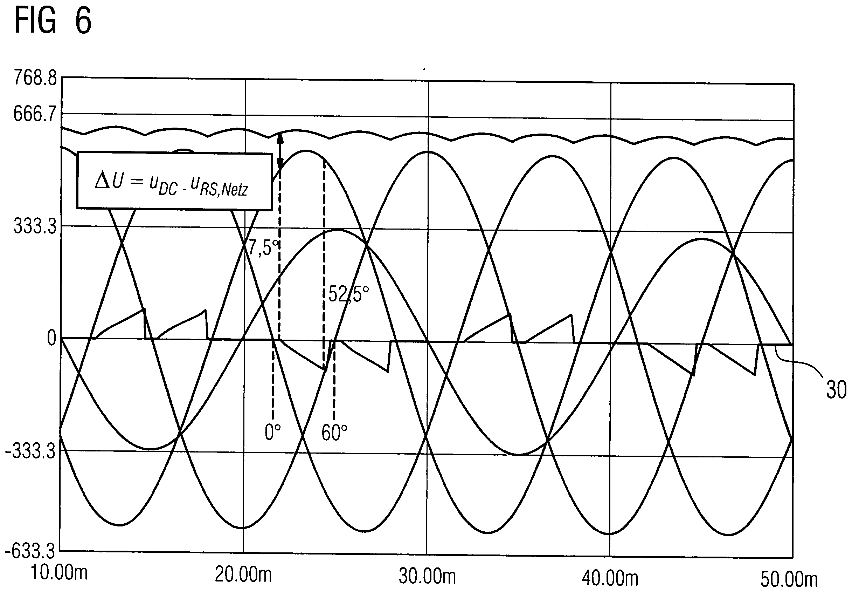

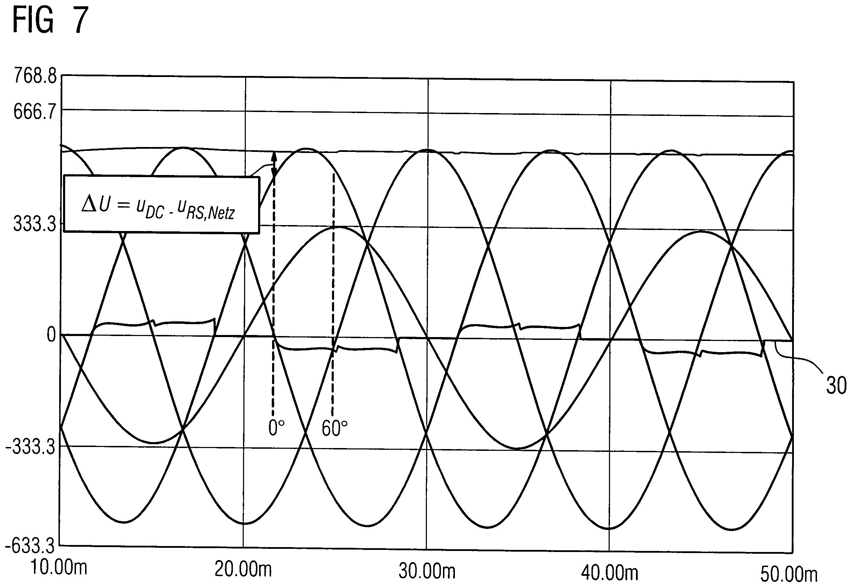

In den FIGen 5 bis 7 ist beispielhaft für drei stationäre Betriebspunkte dargestellt, wie der mittlere Netzstrom und damit die mittlere Zwischenkreisspannung $u_{DC}$ von der Größe des Schaltsektors abhängen. Vorzugsweise wird $\phi_2$ so gewählt, dass $\phi_2 = 60° - \phi_1 > 30°$ gilt. Im Einzelnen zeigt FIG 5 eine Situation für eine Rückspeiseleistung von 20 kW, wobei sich durch Reduzierung des Schaltsektors auf $\phi_1 = 60° - \phi_2 = 15°$ eine resultierende mittlere Zwischenkreisspannung $u_{DC}$ von etwa 690V ergibt. FIG 6 zeigt eine Situation für eine Rückspeiseleistung von 20 kW, wobei sich durch Reduzierung des Schaltsektors auf $\phi_1 = 60° - = 7,5°$ eine resultierende mittlere Zwischenkreisspannung $u_{DC}$ von etwa 620V ergibt. FIG 7 zeigt schließlich eine Situation, bei der sich bei einer Rückspeiseleistung von 20 kW und einem vollem Schaltsektor ($\phi_1 = 60° - \phi_2 = 0°$) eine resultierende mittlere Zwischenkreisspannung $u_{DC}$ von etwa 550V ergibt. Im Zentrum der Darstellungen in FIG 5 bis FIG 7 ist jeweils ein Signal zur Ansteuerung der jeweiligen Halbleiterschalter T1-T6 (Ansteuersignal 30) gezeigt.

Zur Anpassung des Winkels $\phi_1$ in Abhängigkeit der Zwischenkreisspannung $u_{DC}$ kommen zumindest folgende Ansätze in Betracht:

1. Eine $\phi_1(u_{DC})$ - Kennlinie zur kontinuierliche Erhöhung der Rückspeiseleistung bei steigender Zwischenkreisspannung

$$\phi_1(u_{DC}) = \left(1 - \frac{u_{DC} - u_{DC,\min}}{u_{DC,\max} - u_{DC,\min}}\right)\phi_{1,\max} \quad f\ddot{u}r \ u_{DC,\min} < u_{DC} < u_{DC,\max}$$

$$\phi_1(u_{DC}) = 0 \qquad\qquad f\ddot{u}r \ u_{DC} \geq u_{DC,\max} \qquad\quad ,$$

$$\phi_1(u_{DC}) = \phi_{1,\max} \qquad\qquad f\ddot{u}r \ u_{DC} \leq u_{DC,\min}$$

wobei ab $u_{DC,\max}$ ein volle Rückspeiseleistung erreicht wird und unterhalb von $u_{DC,\min}$ der Schaltsektor am kleinsten ist und wobei, wie bereits erwähnt, die Transistoren unterhalb einer weiteren $u_{DC}$-Schwelle dauerhaft gesperrt werden, da dann keine Rückspeisung mehr erforderlich ist und somit Umladeströme zwischen Netz und Zwischenkreis vermieden werden,

oder

2. Eine $\phi_1(u_{DC})$ - Kennlinie wie unter 1., erweitert um einen integrierenden Term, um bei dauerhaftem Rückspeisebetrieb mit einem vollen Schaltsektor arbeiten zu können, d. h. $\phi_1 = 0$ zu erreichen, wobei z. B. bei Beginn des Rückspeisens zunächst ein Initialisierungswert $\phi_{1,\max,Init}$ verwendet wird, wobei anschließend z. B. bei einer digitalen Realisierung in jedem Abtastschritt der Schaltsektor um den Betrag $\Delta\phi_1$ wieder vergrößert wird

$$\phi_{1,\max}(k+1) = \phi_{1,\max}(k) - \Delta\phi_1 \qquad \textit{für } \phi_{1,\max}(k+1) > 0$$
$$\textit{anderenfalls gilt } \phi_{1,\max}(k+1) = 0 \qquad \text{,}$$

oder

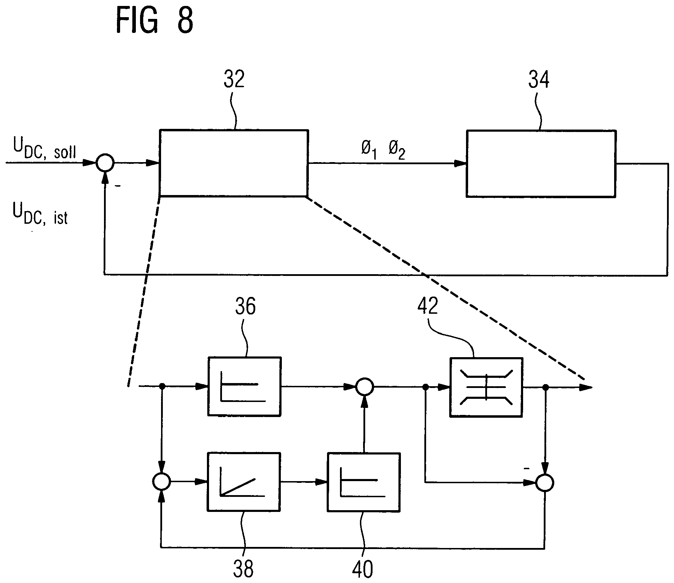

3. Eine vollständigen Regelung (analog / digital), die insbesondere auch einen integrierenden Anteil (mit Begrenzung und Anti-Windup-Funktion) aufweisen kann. FIG 8 zeigt dazu ein Blockschaltbild des Regelkreises mit einem als Regler 32 dargestellten Zwischenkreisspannungsregler und einer als Strecke 34 dargestellten Kombination aus einer Schaltlogik zur Ansteuerung der Halbleiterschalter T1-T6 und dem Stromrichter 10. Entsprechend der detaillierteren Darstellung des Reglers 32 umfasst dieser einen als Proportionalglied (P-Glied) fungierenden ersten Funktionsblock 36 als Bestandteil eine Proportionalkanals für die Regelung, einen als Integralglied (I-Glied) fungierenden zweiten Funktionsblock 38 zur Realisierung eines Integralanteils der Regelung, einen als Proportionalglied (P-Glied) fungierenden dritten Funktionsblock 40 zur Realisierung einer Proportionalverstärkung des Integralkanals und einen als Begrenzungsglied (Antiwindup-Glied) fungierenden vierten Funktionsblock 42 für die Begrenzung der Stellgröße auf Zu beachtende physikalische Grenzwerte. Durch die Rückführung einer Differenz aus begrenztem und unbegrenztem Signal auf den Reglereingang wird verhindert, dass der Integrator auf Grenzen läuft, wenn der Regler wegen einer Aktorbegrenzung seinen Eingangssollwert nicht erreichen kann. Der Regler 32 liefert anhand von Führungsgröße $u_{DC,soll}$ und Regelgröße $u_{DC,Ist}$ als Werte für die Schaltsektorgröße deren Start- und Endpunkt als $\phi_1$ und $\phi_2$, die für die Schaltlogik zur Ansteuerung der Halbleiterschalter verwendet werden.

Um eine zu schnelle Änderung der Schaltsektorgröße zu vermeiden, kann es generell sinnvoll sein, die beeinflussende Systemgröße - hier $u_{DC}$ - vor der Ermittlung der aktuellen Schaltsektorgröße $\phi_1$ erst zu filtern bzw. zu glätten (z. B. mit einem PT1-Glied).

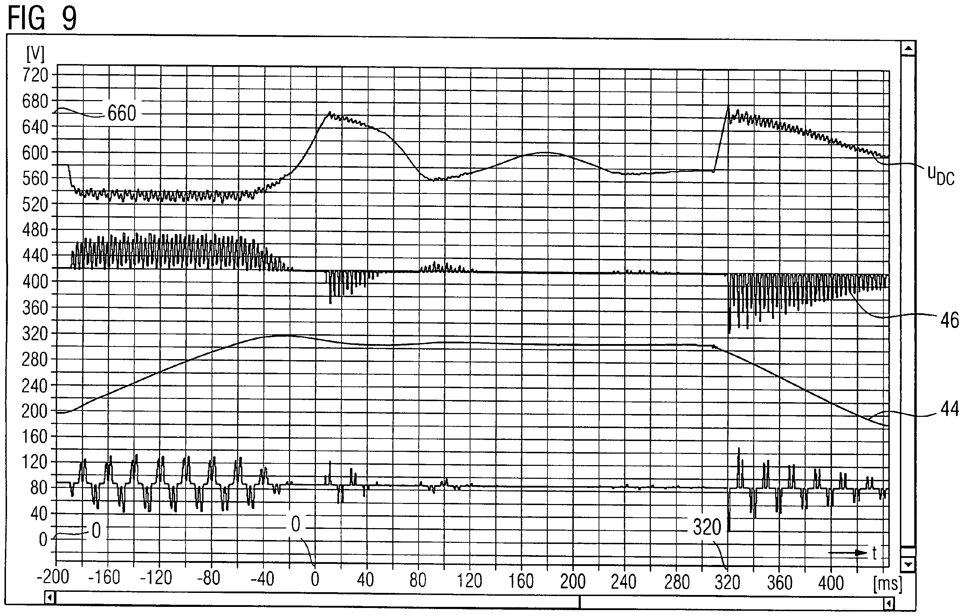

FIG 9 zeigt im Vergleich zu FIG 3 die geringeren Spannungssteilheiten durch Anwendung des vorgeschlagenen oben unter 2. skizzierten Verfahrens. Zum Beschleunigen eines Antriebs wird zunächst Wirkleistung aus dem Netz 12 (FIG 1) aufgenommen und die Zwischenkreisspannung $u_{DC}$ fällt ab. Die Leistungsentnahme aus dem Netz ist durch den Graph einer Drehzahl 44 und den Graph einer Einspeisewirkleistung 46 gezeigt. Am Ende einer Beschleunigungsrampe muss wegen Drehzahl-Überschwingens kurzzeitig Energie zurückgespeist werden (ab t=0). Die Zwischenkreisspannung $u_{DC}$ steigt und ab 660V wird das Rückspeisen mit kleinem Schaltsektor gestartet und bei Unterschreiten einer unteren Spannungsschwelle oder bei Anforderung positiver Wirkleistung wieder gestoppt. Ab t=320ms wird zum Abbremsen des Antriebs erneut zurückgespeist. Der Schaltsektor wird dabei schrittweise wieder vergrößert, um bei dauerhaftem Rückspeisebetrieb durchgehende 120°-Stromblöcke und damit eine Minimalzahl an Schalthandlungen zu erreichen.

Reduzierung der Stromgrenze

Bei rein gesteuerten Verfahren - wie dem grundfrequenten Betrieb - stellt sich der Netzstrom in Abhängigkeit der Zwischenkreisbelastung und der Netzspannung ein. Um den Stromrichter 10 vor Überströmen zu schützen, die die Halbleiterschalter T1-T6 beschädigen könnten, wird nach dem Stand der Technik eine Schaltung zur schnellen Stromüberwachung und Abschaltung der Halbleiterschalter T1-T6 implementiert. Diese Schaltung wird üblicherweise so realisiert, dass die Ansteuersignale 30 für die vom Überstrom betroffenen Halbleiterschalter T1-T6 unterbrochen werden, wenn eine vorgegebene oder vorgebbare Stromschwelle $I_{lim,1}$ überschritten wird. Statt einer Pulssperre in einem oder mehreren Brückenzweigen kann auch der jeweils gegenüberliegende Halbleiterschalter T1-T6 eingeschaltet werden. Die reguläre Ansteuerung wird wieder freigegeben, wenn der Strom einen unteren Schwellwert $I_{lim,2}$ wieder unterschritten hat (Hysterese) oder eine bestimmte Wartezeit abgelaufen ist.

Vorgeschlagen wird nun, beim grundfrequenten Stromrichterbetrieb nach FIG 2, die genannten Stromgrenzen im Falle des Rückspeisens dynamisch in Abhängigkeit von einer Systemgröße - hier vorzugsweise der Zwischenkreisspannung $u_{DC}$ - anzupassen. Wie bei Ansatz zur Reduzierung des Schaltsektors kann dies erfolgen mit Hilfe

1. einer Kennlinie $I_{lim,1}(u_{DC})$ zur kontinuierlichen Erhöhung der Rückspeiseleistung bei steigender Zwischenkreisspannung $u_{DC}$:

$$I_{\lim,1}\big(u_{DC}\big) = I_0 + \left(\frac{u_{DC} - u_{DC,\min}}{u_{DC,\max} - u_{DC,\min}}\right) I_{\lim,\max} \qquad f\ddot{u}r\ u_{DC,\min} < u_{DC} < u_{DC,\max}$$

$$I_{\lim,1}\big(u_{DC}\big) = I_0 + I_{\lim,\max} \qquad\qquad f\ddot{u}r\ u_{DC} \geq u_{DC,\max} \qquad,$$

$$I_{\lim,1}\big(u_{DC}\big) = I_0 \qquad\qquad f\ddot{u}r\ u_{DC} \leq u_{DC,\min}$$

wobei ab $u_{DC,\max}$ volle Rückspeiseleistung erreicht wird und unterhalb von $u_{DC,\min}$ der zulässige Phasenstrom am kleinsten ist und wobei, wie bereits erwähnt, die Halbleiterschalter T1-T6 unterhalb einer weiteren $u_{DC}$-Schwelle dauerhaft gesperrt sind, da dann keine Rückspeisung mehr erforderlich ist und somit Umladeströme zwischen Netz und Zwischenkreis vermieden werden,
oder

2. einer $I_{\lim,1}(u_{DC})$-Kennlinie wie unter 1., erweitert um einen integrierenden Term, um bei dauerhaftem Rückspeisebetrieb mit einem vollen Schaltsektor zu arbeiten (d.h. $I_{\lim,1}(u_{DC}) = I_0 + I_{\lim,\max}$ zu erreichen), wobei z. B. beim Beginn des Rückspeisens zunächst ein Initialisierungswert $h_{\lim,\max,Init}$ gesetzt werden kann, der anschließend bei einer digitalen Realisierung in jedem Abtastschritt der Schaltsektor um den Betrag $\Delta I_1$ wieder vergrößert wird:

$$I_{\lim,\max}\big(k+1\big) = I_{\lim,\max}\big(k\big) - \Delta I_1 \qquad f\ddot{u}r\ I_{\lim,\max}\big(k+1\big) > 0$$

$$anderenfalls\ gilt\ I_{\lim,\max}\big(k+1\big) = I_0$$

oder

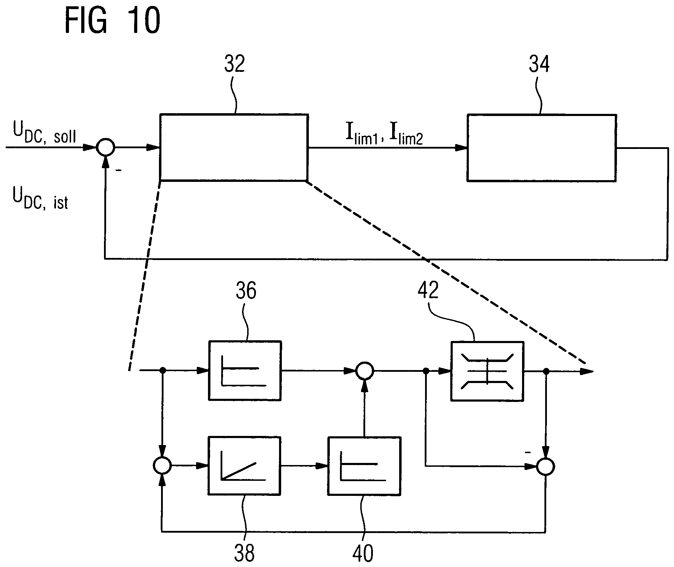

3. einer vollständigen Regelung (analog / digital), die insbesondere auch einen integrierenden Anteil (mit Begrenzung und Anti-Windup-Funktion) aufweisen kann. FIG 10 zeigt dazu ein Blockschaltbild des Regelkreises mit einem als Regler 32 dargestellten Zwischenkreisspannungsregler 32 und einer als Strecke 34 dargestellten Kombination aus einer Strombegrenzung und dem Stromrichter 10. Entsprechend der detaillierteren Darstellung des Reglers 32 umfasst dieser einen als Proportionalglied (P-Glied) fungierenden ersten Funktionsblock 36, einen als Integralglied (I-Glied) fungierenden zweiten Funktionsblock 38, einen als Proportionalglied (P-Glied) fungierenden dritten Funktionsblock 40 und einen als Begrenzungsglied (Antiwindup-Glied) fungierenden vierten Funktionsblock 42, wobei zur weiteren Erläuterung der Funktionalität der einzelnen Funktionsblocks auf die Beschreibung weiter oben im Zusammenhang mit FIG 8 verwiesen wird. Der Regler 32 liefert anhand von Führungsgröße $u_{DC,soll}$ und Regelgröße $u_{DC,Ist}$ Grenzwerte für die Strombegrenzung als $I_{lim1}$ und $I_{lim2}$.

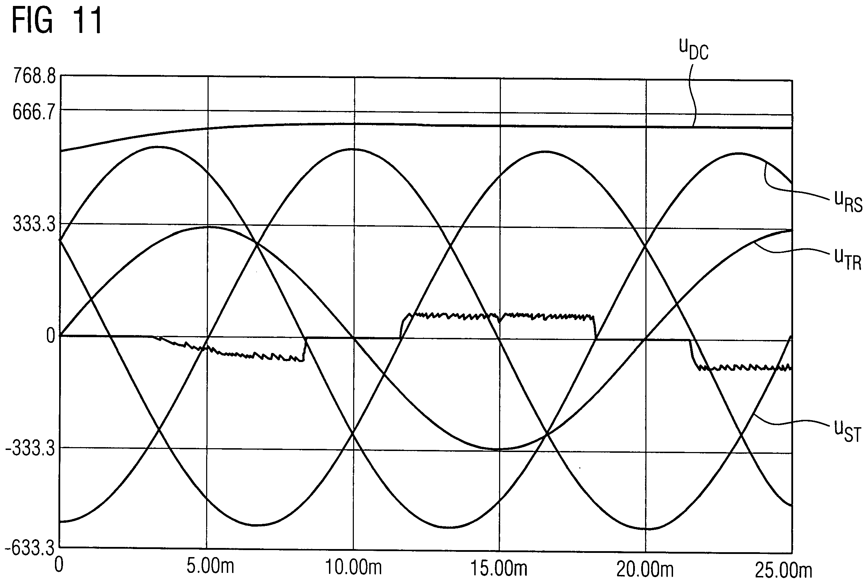

In FIG 11 ist ein beispielhafter Ablauf zur Reduzierung der Stromgrenze wie unter 1. vorgeschlagen dargestellt. Die aus dem Zwischenkreis 14 in das Netz 12 zu speisende Last wird konstant als 20 kW angenommen. Mit ansteigender Zwischenkreisspannung $u_{DC}$ wird der zulässige Strom über die Halbleiterschalter T1-T6 erhöht. Die grundsätzliche Form des Stroms gemäß dem netzfrequenten Betrieb bleibt erhalten.

Beim vorgeschlagenen Ansatz zur Reduzierung der Stromgrenze wird die Forderung nach netzfrequenter Taktung der Halbleiterschalter T1-T6 fallen gelassen, weil eine solche Forderung aufgrund des Zweipunkt-Schaltens zur Strombegrenzung nicht mehr erfüllt werden kann. Diese Variante ist insoweit optional und nur der Vollständigkeit halber aufgeführt. Zum Schutz des Umrichters ist dennoch eine Kombination der beschriebenen Ansätze zur Reduzierung des Schaltsektors und zur Reduzierung der Stromgrenze sinnvoll.

**Patentansprüche**

**1.** Verfahren zur Einstellung einer Rückspeiseleistung eines grundfrequent getakteten, netzseitigen Stromrichters (10) mit einer mit steuerbaren Halbleiterschaltern (T1, T2, T3, T4, T5, T6) bestückten Brückenschaltung,

- wobei die grundfrequente Taktung der Halbleiterschalter (T1-T6) abhängig von einer gewünschten Richtung eines Leistungsflusses über die Brückenschaltung erfolgt und
- wobei Ansteuersignale (30) für die Halbleiterschalter (T1-T6) aus der grundfrequenten Taktung und einer von einer Systemgröße des Stromrichters (10) abhängigen Einschaltverzögerung abgeleitet werden,

**dadurch gekennzeichnet, dass** die Einschaltverzögerung auf Basis einer vorgegebenen oder vorgebbaren Kennlinie ($\phi_1$) in Abhängigkeit von der jeweiligen Systemgröße ermittelt wird.

**2.** Verfahren nach Anspruch 1, wobei die Ansteuersignale (30) für die Halbleiterschalter (T1-T6) aus der grundfrequenten Taktung und einer von einer Zwischenkreisspannung ($u_{DC}$) eines mit dem Stromrichter (10) verbundenen Zwischenkreises (14) abhängigen Einschaltverzögerung abgeleitet werden und die Einschaltverzögerung auf Basis einer vorgegebenen oder vorgebbaren Kennlinie ($\phi_1$) in Abhängigkeit von der Zwischenkreisspannung ($u_{DC}$) ermittelt wird.

**3.** Verfahren nach Anspruch 1 oder 2, wobei die Kennlinie ($\phi_1$) um einen integrierenden Term ergänzt ist, der zur sukzessiven Reduzierung der Einschaltverzögerung wirksam ist.

**4.** Verfahren nach Anspruch 1, 2 oder 3, wobei die Kennlinie ($\phi_1$) mittels eines Reglers (32) realisiert ist.

**5.** Verfahren nach einem der vorangehenden Ansprüche, wobei Grenzwerte für eine Strombegrenzung auf Basis einer vorgegebenen oder vorgebbaren Kennlinie ($I_{\mathrm{lim},1}(u_{DC})$) in Abhängigkeit von der Systemgröße, insbesondere der Zwischenkreisspannung ($u_{DC}$), ermittelt werden.

**6.** Verfahren nach Anspruch 5, wobei die Kennlinie ($I_{\mathrm{lim},1}(u_{DC})$) um einen integrierenden Term ergänzt ist, der zur sukzessiven Reduzierung der Einschaltverzögerung wirksam ist.

**7.** Verfahren nach einem der vorangehenden Ansprüche, wobei aus der Einschaltverzögerung eine negative Ausschaltverzögerung abgeleitet wird.

**8.** Computerprogramm mit durch einen Computer ausführbaren Programmcodeanweisungen zur Implementierung des Verfahrens nach einem der Ansprüche 1 bis 7 wenn das Computerprogramm auf einem Computer ausgeführt wird.

**9.** Speichermedium mit einem durch einen Computer ausführbaren Computerprogramm gemäß Anspruch 8.

**10.** Stromrichtergerät mit einem grundfrequent getakteten, netzseitigen Stromrichter (10) mit einer mit steuerbaren Halbleiterschaltern (T1, T2, T3, T4, T5, T6) bestückten Brückenschaltung,

- wobei die grundfrequente Taktung der Halbleiterschalter (T1-T6) abhängig von einer gewünschten Richtung eines Leistungsflusses über die Brückenschaltung erfolgt,
- mit Mitteln zur Ableitung von Ansteuersignalen (30) für die Halbleiterschalter (T1-T6) aus der grundfrequenten Taktung und einer von einer Systemgröße des Stromrichters (10) abhängigen Einschaltverzögerung,

**gekennzeichnet durch**

Mittel zur Ermittlung der Einschaltverzögerung auf Basis einer vorgegebenen oder vorgebbaren Kennlinie ($\phi_1$) in Abhängigkeit von der jeweiligen Systemgröße.

**11.** Stromrichtergerät nach Anspruch 10,
mit Mitteln zur Ableitung von Ansteuersignalen (30) für die Halbleiterschalter (T1-T6) aus der grundfrequenten Taktung und einer von einer Zwischenkreisspannung ($u_{DC}$) eines mit dem Stromrichter (10) verbundenen Zwischenkreises (14) abhängigen Einschaltverzögerung und
Mitteln zur Ermittlung der Einschaltverzögerung auf Basis einer vorgegebenen oder vorgebbaren Kennlinie ($\phi_1$) in Abhängigkeit von der Zwischenkreisspannung ($u_{DC}$).

**12.** Stromrichtergerät nach Anspruch 10 oder 11, auf dem ein Computerprogramm nach Anspruch 8 geladen ist.

**13.** Stromrichtergerät mit einer Verarbeitungseinheit als Mittel zur Ableitung der Ansteuersignale und als Mittel zur Ermittlung der Einschaltverzögerung, die zur Ausführung eines Computerprogramms nach Anspruch 8 vorgesehen ist.

**Claims**

**1.** Method for setting a feedback power of a fundamental frequency clocked converter (10) on the power supply side comprising a bridge circuit equipped with controllable semiconductor switches (T1, T2, T3, T4, T5, T6),

- wherein the fundamental frequency clocking of the semiconductor switches (T1-T6) is effected depending on a desired direction of a power flow via the bridge circuit, and
- wherein drive signals (30) for semiconductor switches (T1-T6) are derived from the fundamental frequency clocking and a switch-on delay dependent on a system variable of the converter (10),

**characterized in that** the switch-on delay is determined on the basis of a predetermined or predeterminable characteristic curve ($\phi_1$) depending on the respective system variable.

2. Method according to Claim 1, wherein the drive signals (30) for the semiconductor switches (T1-T6) are derived from the fundamental frequency clocking and a switch-on delay dependent on an intermediate circuit voltage ($u_{DC}$) of an intermediate circuit (14) connected to the converter (10), and the switch-on delay is determined on the basis of a predetermined or predeterminable characteristic curve ($\phi_1$) depending on the intermediate circuit voltage ($u_{DC}$).

3. Method according to Claim 1 or 2, wherein the characteristic curve ($\phi_1$) is supplemented by an integrating term, which is effective for progressively reducing the switch-on delay.

4. Method according to Claim 1, 2 or 3, wherein the characteristic curve ($\phi_1$) is realized by means of a controller (32).

5. Method according to any of the preceding claims, wherein limit values for current limiting are determined on the basis of a predetermined or predeterminable characteristic curve ($I_{\lim.1}(u_{DC})$) depending on the system variable, in particular the intermediate circuit voltage ($U_{DC}$).

6. Method according to Claim 5, wherein the characteristic curve ($I_{\lim.1}(u_{DC})$) is supplemented by an integrating term, which is effective for progressively reducing the switch-on delay.

7. Method according to any of the preceding claims, wherein a negative switch-off delay is derived from the switch-on delay.

8. Computer program comprising program code instructions executable by a computer and serving for implementing the method according to any of Claims 1 to 7 when the computer program is executed on a computer.

9. Storage medium comprising a computer program executable by a computer according to Claim 8.

10. Converter device comprising a fundamental frequency clocked converter (10) on the power supply side comprising a bridge circuit equipped with controllable semiconductor switches (T1, T2, T3, T4, T5, T6),

   - wherein the fundamental frequency clocking of the semiconductor switches (T1-T6) is effected depending on a desired direction of a power flow via the bridge circuit,
   - comprising means for deriving drive signals (30) for the semiconductor switches (T1-T6) from the fundamental frequency clocking and a switch-on delay dependent on a system variable of the converter (10),

   **characterized by**
   means for determining the switch-on delay on the basis of a predetermined or predeterminable characteristic curve ($\phi_1$) depending on the respective system variable.

11. Converter device according to Claim 10,
   comprising means for deriving drive signals (30) for the semiconductor switches (T1-T6) from the fundamental frequency clocking and a switch-on delay dependent on an intermediate circuit voltage ($u_{DC}$) of an intermediate circuit (14) connected to the converter (10), and
   means for determining the switch-on delay on the basis of a predetermined or predeterminable characteristic curve ($\phi_1$) depending on the intermediate circuit voltage ($u_{DC}$).

12. Converter device according to Claim 10 or 11, on which a computer program according to Claim 8 is loaded.

13. Converter device comprising a processing unit as means for deriving the drive signals and as means for determining the switch-on delay, which is provided for executing a computer program according to Claim 8.

**Revendications**

1. Procédé de réglage d'une puissance régénérative d'un convertisseur ( 10 ) de courant, cadencé à la fréquence fondamentale du côté du réseau et ayant un circuit en pont équipé d'interrupteurs ( T1, T2, T3, T4, T5, T6 ) à semi-conducteur pouvant être commandés,

   - dans lequel le cadencement à la fréquence fondamentale des interrupteurs ( T1 à T6 ) à semi-conducteur s'effectue par le circuit en pont en fonction d'un sens souhaité d'un flux de puissance et
   - dans lequel on déduit des signaux ( 30 ) de commande des interrupteurs ( T1 à T6 ) à semi-conducteur, du cadencement à la fréquence fondamentale et d'un retard de mise à l'état passant qui dépend d'une grandeur systémique du convertisseur ( 10 ) de courant,

   **caractérisé en ce que** l'on détermine le retard de mise à l'état passant en fonction de la grandeur systémique sur la base d'une courbe ( $\phi_1$ ) caractéristique donnée à l'avance ou pouvant l'être.

2. Procédé suivant la revendication 1, dans lequel on déduit les signaux ( 30 ) de commande des interrupteurs ( T1 à T6 ) à semi-conducteur, du cadencement à la fréquence fondamentale et d'un retard de mise à l'état passant dépendant d'une tension ( $U_{DC}$ ) d'un circuit ( 14 ) intermédiaire relié au convertisseur ( 10 ) de courant et on détermine le retard à la mise à l'état passant en fonction de la tension ( $U_{DC}$ ) du circuit intermédiaire, sur la base d'une courbe ( $\phi_1$ ) caractéristique donnée à l'avance ou pouvant l'être.

3. Procédé suivant la revendication 1 ou 2, dans lequel la courbe ( $\phi_1$ ) caractéristique est complétée d'un terme d'intégration, qui est efficace pour la réduction successive du retard de mise à l'état passant.

4. Procédé suivant la revendication 1, 2 ou 3, dans lequel la courbe ( $\phi_1$ ) caractéristique est réalisée au moyen d'un régleur ( 32 ).

5. Procédé suivant l'une des revendications précédentes, dans lequel on détermine des valeurs limites d'une limitation de courant en fonction de la grandeur systémique, notamment de la tension ( $U_{DC}$ ) de circuit intermédiaire, sur la base d'une courbe ( $I_{lim,1}$ ( $u_{DC}$ ) ) caractéristique donnée à l'avance ou pouvant l'être.

6. Procédé suivant la revendication 5, dans lequel la courbe ( $I_{lim,1}$ ( $u_{DC}$ ) ) caractéristique est complétée d'un terme d'intégration, qui est efficace pour la réduction successive du retard de mise à l'état passant.

7. Procédé suivant l'une des revendications précédentes, dans lequel on déduit un retard négatif de mise à l'état bloqué du retard de mise à l'état passant.

8. Programme d'ordinateur comprenant des instructions de code de programme pouvant être réalisées par un ordinateur pour la mise en oeuvre du procédé suivant l'une des revendications 1 à 7, lorsque le programme d'ordinateur est réalisé sur un ordinateur.

9. Support de mémoire ayant un programme d'ordinateur réalisable par un ordinateur suivant la revendication 8.

10. Appareil de convertisseur de courant, ayant un convertisseur ( 10 ) de courant, cadencé à la fréquence fondamentale du côté du réseau et ayant un circuit en pont équipé d'interrupteurs ( T1, T2, T3, T4, T5, T6 ) à semi-conducteur pouvant être commandés,

   - dans lequel le cadencement à la fréquence fondamentale des interrupteurs ( T1 à T6 ) à semi conducteur s'effectue par le circuit en pont en fonction d'un sens souhaité d'un flux de puissance et
   - comprenant des moyens de déduction de signaux ( 30 ) de commande des interrupteurs ( T1 à T6 ) à semi-conducteur, du cadencement à la fréquence fondamentale et d'un retard de mise à l'état passant, qui dépend d'une grandeur systémique du convertisseur ( 10 ) de courant,

   **caractérisé par**

   des moyens de détermination du retard de mise à l'état passant sur la base d'une courbe ( $\phi_1$ ) caractéristique donnée à l'avance ou pouvant l'être en fonction de la grandeur systémique.

**11.** Appareil de convertisseur de courant suivant la revendication 10,
comprenant des moyens de déduction de signaux ( 30 ) de commande des interrupteurs ( T1 à T6 ) à semi-conducteur, du cadencement à la fréquence fondamentale et d'un retard de mise à l'état passant dépendant d'une tension ( $U_{DC}$ ) d'un circuit ( 14 ) intermédiaire relié au convertisseur ( 10 ) de courant et
des moyens de détermination en fonction de la tension ( $U_{DC}$ ) du circuit intermédiaire du retard à la mise à l'état passant sur la base d'une courbe ( $\phi_1$ ) caractéristique donnée à l'avance ou pouvant l'être.

**12.** Appareil de convertisseur de courant suivant la revendication 10 ou 11, sur lequel un programme d'ordinateur suivant la revendication 8 est chargé.

**13.** Appareil de convertisseur de courant, ayant une unité de traitement comme moyen de déduction des signaux de commande et comme moyen de détermination du retard à la mise à l'état passant, qui est prévu pour la réalisation d'un programme d'ordinateur suivant la revendication 8.

FIG 1

# FIG 2

FIG 3

## FIG 4

FIG 5

EP 2 144 361 B1

# FIG 6

$$\Delta U = u_{DC} - u_{RS,Netz}$$

FIG 7

FIG 8

FIG 9

EP 2 144 361 B1

## FIG 10

FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005012150 A1
- DE 102006015031 A1
- DE 102006028103 A1